# EUROPÄISCHE PATENTSCHRIFT

(11) **EP 0 547 638 B1**
(45) Veröffentlichungstag und Bekanntmachung des Hinweises auf die Patenterteilung: **19.11.1997**
(21) Anmeldenummer: 92121652.9
(22) Anmeldetag: 19.12.1992
(51) Int. Cl.: B25B 23/10

(54) **Verschraubungsgerät**
Screwing device
Outil de vissage

(30) Priorität: 19.12.1991 DE 4141961; 15.04.1992 DE 4212614
(43) Veröffentlichungstag der Anmeldung: 23.06.1993
(73) Patentinhaber: Adolf Würth GmbH & Co. KG, D-74653 Künzelsau (DE)
(72) Erfinder: Humm, Siegfried, W-7109 Schöntal-Westernhausen (DE); Palosi, Gabor, W-7110 Öhringen-Büttelbronn (DE)
(74) Vertreter: Patentanwälte Ruff, Beier, Schöndorf und Mütschele

(56) Entgegenhaltungen:
- DE-A- 2 624 441
- DE-A- 3 815 814
- GB-A- 230 189
- US-A- 1 839 490
- US-A- 2 314 760
- US-A- 3 524 484

## Beschreibung

Die Erfindung betrifft ein Verschraubungsgerät.

Es sind bereits Verschraubungsgeräte bekannt. Sie enthalten einen motorischen Antrieb, mit dem eine Schraube angetrieben und eingeschraubt werden kann. Die Schrauben werden durch ein Zuführrohr eingeworfen und fallen bis zu einem Haltekopf, der im unteren Bereich des Gerätes angeordnet ist. Dort werden die Schrauben gehalten. Der Benutzer drückt den Antrieb nach unten, bis dieser mit einem Werkzeug in den Schraubenkopf eingreift und die Schraube eindreht.

Bei einem bekannten Gerät (DE-A1-26 24 441) wird die Schraube von zwei an der gleichen axialen Stelle angeordneten Halteelementen gehalten, die zwischen sich einen zylindrischen Durchgang bilden. Da es sich bei den einzuschraubenden Schrauben im Normalfall um Schrauben mit einem Bohrkopf und sich daran anschließenden seitlichen Flügeln handelt, können mit einem solchen Gerät nur Schrauben verarbeitet werden, bei denen der Abstand zwischen dem Schraubenkopf und den Flügeln größer ist als die Länge der Halteelemente. Die Halteelemente greifen so an, daß die Schraube mit ihrem Kopf an der Oberseite der Halteelemente hängen bleibt. Dies bedeutet, daß eine Ausrichtung nach dem Kopf der Schraube erfolgt.

Ebenfalls bekannt ist ein solches Gerät, bei dem zum Halten der Schraube zwei unter Federdruck radial nach innen beaufschlagte Kugeln vorhanden sind. Diese greifen ebenfalls an der Schraube unterhalb des Kopfes an. Auf diese Weise können zwar recht kurze Schrauben auch gehaltert werden, jedoch erfolgt wiederum eine Ausrichtung nach dem Kopf der Schraube. Zusätzlich tritt der Nachteil hinzu, daß die Schraube in Axialrichtung schlecht geführt ist.

Weiterhin bekannt ist ein Einschraubgerät (US-A-2 314 760), bei dem die Schraube von zwei federnden Zungen im Bereich ihrer Spitze gehalten und von einer zweiten federnden Zunge im axialen Abstand gegen die Seitenwand einer Zuführöffnung gedrückt wird. Hier erfolgt bereits eine Halterung der Schraube an zwei beabstandeten Stellen. Bei Verwendung von Schrauben mit immer der gleichen Schraubenkopfgröße erfolgt auch eine Ausrichtung der Schraube in axialer Richtung.

Der Erfindung liegt die Aufgabe zugrunde, ein leicht handhabbares Gerät zum Eintreiben eines Befestigungselementes zu schaffen, bei dem nur eine kurze Eintreibbewegung erforderlich ist und bei dem dennoch Befestigungselemente eines sehr großen Bereiches an Abmessungen verwendet werden können.

Zur Lösung dieser Aufgabe schlägt die Erfindung ein Gerät mit den Merkmalen des Anspruchs 1 vor. Weiterbildungen sind Gegenstand der Unteransprüche.

Durch die Halterung des Befestigungselementes an zwei Stellen, die voneinander einen Abstand aufweisen, wird eine bessere Halterung des Befestigungselementes und eine bessere Führung in Längsrichtung ermöglicht. Das Befestigungselement bleibt auch dann ausgerichtet, wenn der Antrieb einsetzt, das Befestigungselement aber in dem zu befestigenden Teil noch nicht geführt ist.

Es ist vorgesehen, daß das Befestigungselement im Bereich seines vorderen Endes ausgerichtet wird. Das vordere Ende ist dasjenige Ende des Befestigungselementes, das zuerst in das Teil, in das es eingetrieben werden soll, eingreift. Bei einer Schraube ist das vordere Ende also das mit der Schraubenspitze versehen Ende. Auf diese Weise kann selbst bei Befestigungselementen sehr unterschiedlicher Länge immer dafür gesorgt werden, daß die Spitze in einem bestimmten geringen Abstand vor der Oberfläche gehaltert wird, in die das Befestigungselement eingetrieben werden soll. Dies bedeutet, daß der Eintreibweg immer möglichst kurz ist.

Die von der Erfindung vorgeschlagene Möglichkeit, das Befestigungselement sowohl an seinem Kopf als auch an seiner Spitze zu haltern, ist besonders vorteilhaft, da auf diese Weise der größtmögliche Abstand zwischen den zwei Stellen geschaffen wird, an denen das Befestigungselement festgehalten wird.

Zum Angreifen an der Spitze des Befestigungselements sind zwei seitlich bewegbare Haltebacken vorgesehen sind, die insbesondere verschwenkbar ausgebildet sind.

Es kann erfindungsgemäß vorgesehen sein, daß die Haltebacken in geschlossenem Zustand zwischeneinander eine Öffnung frei lassen, die axial gegenüber dem Gerät ausgerichtet sein kann und in der die Spitze des Befestigungselements gehalten wird. Das Befestigungselement kann sich also zwischen den beiden Haltebacken selbst zentrieren, so daß bei entsprechender Ausbildung die Haltebacken auch keine Klemmwirkung aufzuweisen brauchen.

Zur Halterung des Befestigungselementes im Bereich seines Kopfes ist vorgesehen, daß die Halterung ein Rohrelement aufweist, das das Befestigungselement im Bereichseines Kopfes umgibt. Aufgrund der Halterung an zwei voneinander entfernten Stellen wird es möglich, die Halterung des Befestigungselementes in dem Kopfbereich nur annähernd durchzuführen, so daß hier ein gewisser radialer Abstand vorhanden sein kann. Das Rohrelement kann beispielsweise einen kreisrunden Innenquerschnitt aufweisen, der größer als die maximale Querabmessung des Kopfes des Befestigungselements ist.

Bei einem bestimmten Innendurchmesser des Rohrelementes können durchaus Befestigungselemente unterschiedlicher Querabmessungen verwendet werden. Wenn Befestigungselemente stark unterschiedlicher Abmessungen verwendet werden, kann das Rohrelement ausgetauscht werden. Hierunter ist auch zu verstehen, daß in eine rohrförmige Ausbildung der Halterung ein zweites Rohrelement eingesetzt wird. Insbesondere kann vorgesehen sein, daß das Rohrelement von der Unterseite des Gerätes her einsetzbar und/oder herausnehmbar ist. Auf diese Weise läßt sich die Umrüstung für ein anderes Befestigungselement sehr einfach und sehr schnell durchführen.

Damit das einsetzbare oder austauschbare Rohrelement immer richtig positioniert ist, kann erfindungsgemäß vorgesehen sein, das Rohrelement rastend zu haltern. Beispielsweise können unter Federbelastung stehende Kugeln vorgesehen sein, die in entsprechende Vertiefungen des Rohrelements eingreifen.

Erfindungsgemäß kann vorgesehen sein, daß das Rohrelement von oben her zwischen die Haltebacken eingreift.

Erfindungsgemäß kann vorgesehen sein, daß die Haltebacken mindestens teilweise unabhängig voneinander bewegbar sind. Die Möglichkeit, beide Haltebacken mindestens in einem bestimmten Bereich unabhängig voneinander zu bewegen, macht die Verwendung auch bei komplizierten Formen der Befestigungselemente möglich, beispielsweise bei den oben erwähnten, mit Flügeln versehenen Schrauben.

Erfindungsgemäß kann in Weiterbildung vorgesehen sein, daß die Klemmelemente derart geführt sind, daß dann, wenn das Klemmelement für die Spitze des Befestigungselementes geschlossen ist, das andere Klemmelement mindestens teilweise geöffnet ist. Da die Befestigungselemente durch die Zuführeinrichtung im Normalfall nach unten bewegt werden, also herabfallen, wird auf diese Weise dafür gesorgt, daß die Spitze des Befestigungselementes durch die Stelle des etwas geöffneten oberen Klemmelementes hindurchfällt und erst vom unteren Klemmelement festgehalten wird. Das gleiche gilt natürlich auch, wenn in anderer Richtung gearbeitet wird.

In Weiterbildung kann erfindungsgemäß vorgesehen sein, die gegenseitige Beeinflussung der beiden Klemmelemente so auszugestalten, daß dann, wenn das Klemmelement für die Spitze des Befestigungselementes in nichtgeschlossener Stellung ist, das andere Klemmelement im ersten Klemmelement unbeeinflußt ist. Hiermit wird das Durchschieben komplizierterer Formen von Klemmelementen erleichtert. Das zweite Klemmelement kann auf diese Weise beispielsweise nach dem Hindurchbewegen der Flügel wieder an den Schaft einer Schraube heranschwenken.

Insbesondere kann vorgesehen sein, daß im Bereich zwischen den Klemmstellen ein radialer Abstand zwischen dem Befestigungselement und der Halteeinrichtung vorgesehen ist.

Erfindungsgemäß kann vorgesehen sein, daß sich die beiden Klemmeinrichtungen beim Eintreiben des Befestigungselementes nacheinander öffnen.

Die Erfindung schlägt vor, daß mindestens eine Klemmeinrichtung von mindestens einer Klemmbacke gebildet werden kann, die sich im wesentlichen radial bewegt.

Besonders günstig ist es, wenn für eine Klemmstelle zwei symmetrisch zur Längsachse des Befestigungselementes angeordnete Klemmbacken vorhanden sind.

Die Klemmelemente der Halterung können mit Vorteil durch Federn beaufschlagt sein.

In Weiterbildung der Erfindung kann vorgesehen sein, daß die Zuführeinrichtung zum Zuführen der Befestigungselemente ein Magazin für diese aufweist. Dadurch wird es dem Benutzer ermöglicht, beispielsweise eine ganze Reihe von Brettern am Boden anzuschrauben, ohne jeweils zwischen den Schraubvorgängen das Gerät absetzen und ein Befestigungselement nachschieben zu müssen. Insbesondere kann vorgesehen sein, daß das Magazin derart ausgebildet ist, daß es die Befestigungselemente lose aufnimmt.

Die Erfindung sieht vor, daß das Magazin bzw. die Zuführeinrichtung eine Vereinzelungseinrichtung für die Befestigungselemente aufweist, die beim Eintreiben des Befestigungselementes weitergeschaltet wird. Dies kann vorteilhafterweise in einem zweistufigen Vorgang geschehen. Beim Vorteiben des Antriebs wird die vorderste Schraube von den anderen getrennt, und beim Zurückziehen des Antriebs freigegeben, so daß sie durch die Zuführeinrichtung zum Haltekopf fällt.

Erfindungsgemäß kann vorgesehen sein, daß die Zuführeinrichtung eine Möglichkeit zum Eingeben eines einzelnen Befestigungselementes unter Umgehung des Magazins aufweist.

Besonders günstig ist das von der Erfindung vorgeschlagene Gerät zum Einschrauben von Schrauben geeignet. In diesem Fall kann vorgesehen sein, daß der Antrieb einen Schrauberantrieb mit einer durch den beim Einschrauben der Schraube entstehenden Gegendruck einrückbaren Kupplung aufweist. Der Motor dieses Schrauberantriebs läuft also ständig, während das von ihm angetriebene Werkzeug nur unter Gegendruck angetrieben wird. Dies macht das Eindringen des Werkzeugs in die Schraubenkopfausnehmung erst in vernünftiger Weise möglich.

Weitere Merkmale, Einzelheiten und Vorzüge der Erfindung ergeben sich aus den Patentansprüchen, deren Wortlaut durch Bezugnahme zum Inhalt der Beschreibung gemacht wird, der folgenden Beschreibung bevorzugter Ausführungsformen der Erfindung sowie anhand der Zeichnungen. Hierbei zeigen, jeweils vereinfacht:
- Fig. 1: eine teilweise geschnittene Seitenansicht des unteren Teils eines Einschraubgeräts;
- Fig. 2: den oberen Teil des Gerätes;
- Fig. 3: einen Längsschnitt durch das Halsrohr des Verschraubungsgerätes;
- Fig. 4: einen Schnitt durch einen Einführstutzen für das Halsrohr;
- Fig. 5: die Aufsicht auf den Einführstutzen der Fig. 4;
- Fig. 6: einen Schnitt durch das Beschickungsgehäuse eines Magazins;
- Fig. 7: die Seitenansicht des Beschickungsgehäuses von der Seite her, an der das Magazin angebracht wird;
- Fig. 8: eine Verbindungslasche zum Verbinden des Beschickungsgehäuses mit dem Einführstutzen und dem Magazin;
- Fig. 9: die Seitenansicht einer Sperrklinke einer Vereinzelungseinrichtung;
- Fig. 10: in vergrößertem Maßstab einen Schnitt durch das Beschickungsgehäuse;
- Fig. 11: schematisch die Möglichkeit der Betätigung der Vereinzelungseinrichtung.
- Fig. 12: schematisch eine teilweise geschnittene Ansicht des Haltekopfs eines Erfindungsgemäßen Verschraubungsgerätes;
- Fig. 13: ein vergrößerten Schnitt etwa längs Linie II-II in Fig. 12

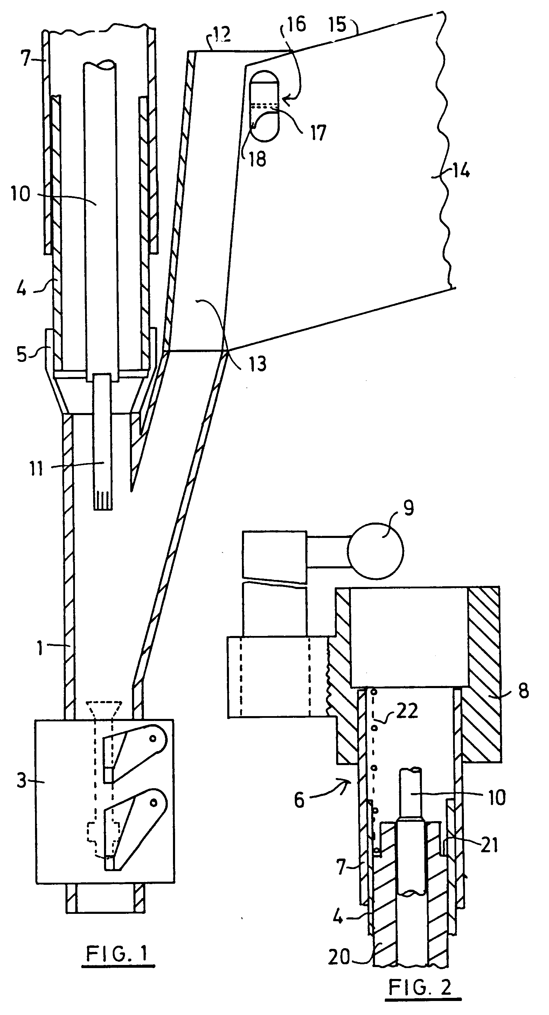

Fig. 1 und 2 zeigen in einer schematischen Übersicht ein Gerät zum Einschrauben von Schrauben.

Bei diesem Gerät handelt es sich nicht um ein Ausführungsbeispiel der Erfindung, sondern um ein Beispiel, das das Verständnis der Erfindung erleichtert. Das Gerät ist bei der dargestellten Ausführungsform dazu bestimmt, Schrauben von oben in horizontale Flächen einzuschrauben. Das Gerät enthält in seinem unteren Bereich ein Halsrohr 1, mit dem die verschiedenen Teile des Gerätes verbunden sind. Das Halsrohr 1 enthält eine seitliche Abzweigung 2 in Form eines Einführstutzens. Im Bereich seiner Unterseite ist das Halsrohr 1 mit einem Haltekopf 3 versehen, in dem die einzuschraubenden Schrauben vor und während des Einschraubens gehalten werden.

An dem dem Haltekopf 3 entgegengesetzten geradlinigen oberen Ende des Halsrohres 1 ist über ein im einzelnen nicht dargestelltes Adapterstück ein Führungsrohr 4 angeschraubt, an dessen Außenseite eine Anschlagmutter 5 vorgesehen ist. Auf dem Führungsrohr 4 verschiebbar zwischen zwei Endstellungen ist eine Antriebsanordnung 6, siehe insbesondere Fig. 2. Die Antriebsanordnung 6 enthält eine Außenhülse 7, die auf dem Führungsrohr 4 aufgesetzt ist und auf diesem teleskopartig gleitet. Am oberen Ende ist die Außenhülse 7 mit einem Klemmstück 8 verbunden, das zur Aufnahme des eigentlichen, in den Figuren nicht dargestellten Antriebs sowie zur Anbringung eines Handgriffs 9 dient. Mit dem Antrieb verbunden ist eine Antriebswelle 10, die sich in Längsrichtung durch das Verschraubungsgerät erstreckt und an deren unterem Ende ein Antriebswerkzeug 11 angebracht ist. Es kann sich dabei um einen üblichen Schraubendreherbit handeln. Die Verschiebbarkeit der Antriebsanordnung 6 ist durch Anschläge begrenzt, wobei die untere Stellung durch die bereits erwähnte, in Fig. 1 dargestellte Anschlagmutter 5 fein eingestellt werden kann.

An dem die Abzweigung bildenden Einführstutzen 2 ist in seinem oberen Bereich ein Beschickungsgehäuse 12 befestigt. Das Beschickungsgehäuse 12 enthält einen nach unten gerichteten, in Verlängerung des Einführstutzens 2 angeordneten Durchgang 13, durch den ein Befestigungselement, beispielsweise eine Schraube, zum Haltekopf 3 fallen kann. An dem Beschickungsgehäuse 12 ist seitlich ein Magazin 14 befestigt, das im wesentlichen aus zwei parallel zueinander verlaufenden und einen Zwischenraum zwischen sich bildenden Magazinplatten besteht. Diese Magazinplatten können eben ausgebildet sein, so daß sie sich also seitlich erstrecken, oder aber auch gebogen, so daß das Magazin 14 insgesamt sich um das Gerät herum erstreckt. Die beiden das Magazin 14 bildenden Platten weisen eine Oberkante 15 auf, die in Richtung auf den Durchgang 13 des Beschickungsgehäuses 12 schräg abwärts verlaufen. Dadurch entsteht eine Kraftkomponente, die in dem Magazin 14 enthaltene Befestigungselemente in Richtung auf die Zuführeinrichtung beaufschlagt. An dem dem Beschickungsgehäuse 12 zugewandten Ende des Magazins 14 ist eine Vereinzelungseinrichtung 16 angeordnet, die ein um eine horizontale Achse verschwenkbares Sperrelement 17 aufweist. Das Sperrelement weist zwei Nasen 18, 19 auf, von denen in Fig. 1 die näher an dem Durchgang 13 liegende Nase 18 zu sehen ist.

Innerhalb des Führungsrohres 4 ist eine die Antriebswelle 10 umgebende Vorspannhülse 20 befestigt, die im Bereich ihrer dem Antrieb zugewandten Stirnseite eine äußere Schulter 21 aufweist. Auf dieser Schulter stützt sich eine angedeutete Druckfeder 22 ab, deren anderes Ende an dem Antrieb anliegt. Die Stärke der Feder 22 ist so gewählt, daß der Antrieb von dieser Feder in die obere Endposition verschoben wird, die in der Fig. 1 dargestellt ist.

Das insoweit beschriebene Einschraubgerät wird folgendermaßen bedient. Der Benutzer setzt das Gerät an einer Stelle, an der er eine Schraube eindrehen will, auf der entsprechenden Oberfläche ab. Ein Befestigungselement, beispielsweise eine Schraube wird durch den Durchgang 13 des Beschickungsgehäuses 12 nach unten fallengelassen, gelangt dort in den Haltekopf 3 und wird dort von den noch zu beschreibenden Halteelementen an zwei beabstandeten Stellen festgehalten. Dann drückt der Benutzer mit Hilfe des Griffs 9 die Antriebseinrichtung 6 nach unten, bis das Werkzeug 11 in die Ausnehmung des Schraubenkopfes eingreift. Drückt er nun den Griff 9 weiter herunter, so entsteht durch die Halteelemente und/oder das Auftreffen der Spitze der Schraube auf der Oberfläche ein Gegendruck, der zu einem Einrücken einer in dem Antrieb angeordneten Kupplung führt. Jetzt wird das Werkzeug 11, das in der Ausnehmung des Schraubenkopfes eingegriffen hat, in Drehbewegung versetzt und schraubt die Schraube ein. Nachdem diese eingeschraubt ist, was der Benutzer durch Anliegen der Außenhülse 7 an der Anschlagmutter 5 feststellen kann, unterbricht der Benutzer die Vorschubbewegung und läßt den Antrieb unter dem Einfluß der Feder 22 in die Ausgangsstellung zurückkehren. Dann kann ein neues Befestigungselement in den Haltekopf 3 herabfallen.

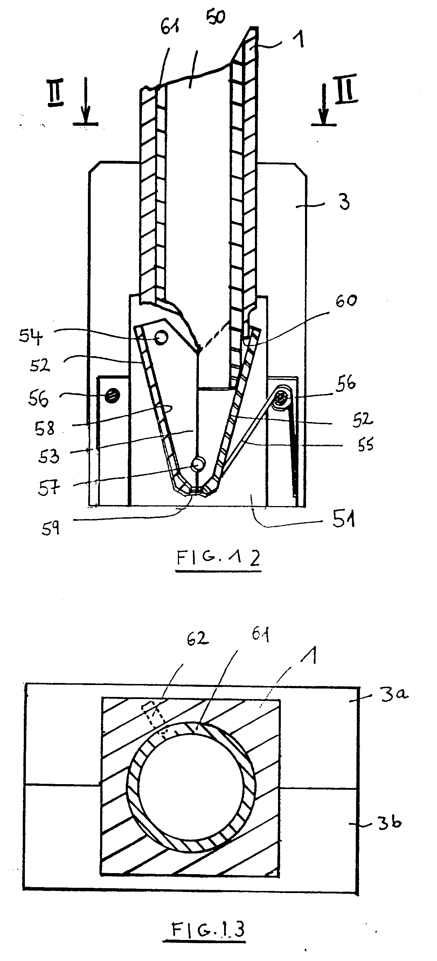

Einzelheiten des Haltekopfes sind in Fig. 12 und 13 dargestellt.

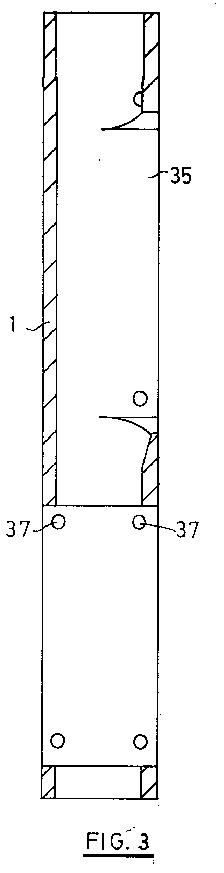

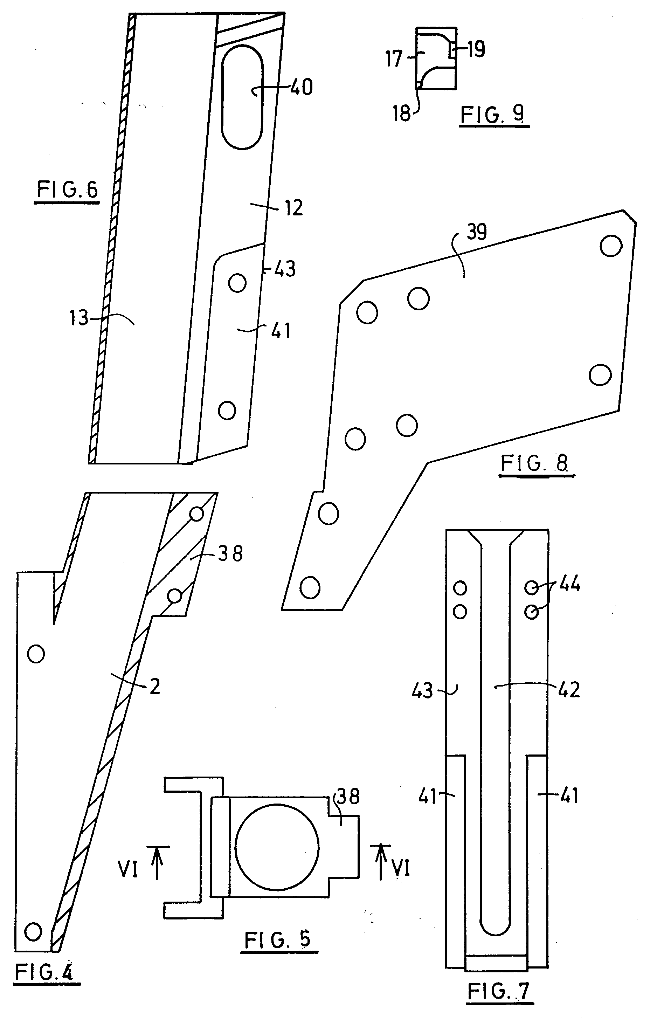

Fig. 3 zeigt einen Längsschnitt durch das Halsrohr 1 mit abgenommenem Einführstutzen. Das Halsrohr 1 weist einen rechteckigen bzw. quadratischen Querschnitt auf und enthält seitlich eine Öffnung 35 zum Einsetzen des Einführstutzens 2 sowie im unteren Bereich je eine Öffnung 36 für die beiden Backenhalterungen 23. Fig. 5 zeigt in den Seitenwänden des Halsrohres die den Löchern 27 entsprechenden Löcher 37.

Fig. 4 zeigt einen Längsschnitt durch den Einführstutzen 2, dessen Funktion aus Fig. 1 schon hervorgeht. Der Einführstutzen wird durch die erwähnte Öffnung 35 in das Halsrohr eingeschoben und dort festgeschraubt. An seiner dem Halsrohr 1 abgewandten Seite ist ein Ansatz 38 an dem Einführstutzen 2 ausgebildet, an dem die in Fig. 8 dargestellte Verbindungslasche 39 festgeschraubt werden kann. Die Verbindungslasche 39 weist nicht nur Löcher zum Anschrauben an dem Ansatz 38, sondern auch zum Anschrauben an dem Beschickungsgehäuse 12 der Fig. 8 auf. Die weiteren Löcher der Verbindungslasche 39 dienen zum Festschrauben des Magazins 14.

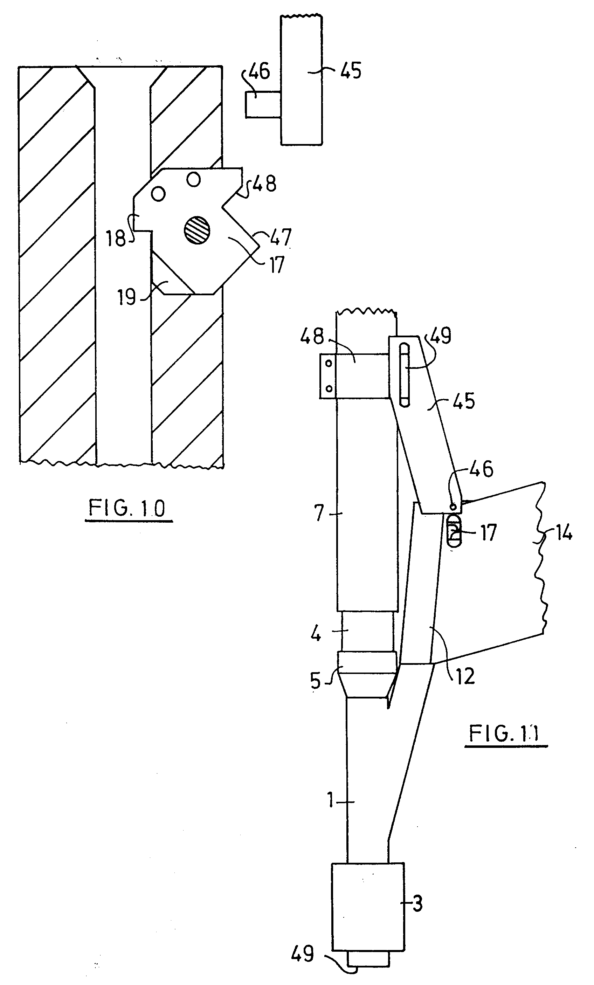

In dem Beschickungsgehäuse 12 ist seitlich neben dem Durchgang 13 im oberen Bereich eine ovale Öffnung 40 ausgebildet, in der das Sperrelement 17, siehe Fig. 11, eingesetzt werden kann. Das Sperrelement 17 weist zwei Nasen 18, 19 auf, die voneinander einen Abstand aufweisen, der im wesentlichen dem Durchmesser eines Befestigungselementes, beispielsweise also einer Schraube, entspricht. Eine der beiden Nasen greift dabei hinter dem letzten Befestigungselement, und die andere hinter dem vorletzten Befestigungselement an, wie dies im folgenden noch dargestellt werden wird.

Fig. 7 zeigt eine Ansicht des Beschickungsgehäuses der Fig. 6 von rechts. Es ist hier zu sehen, daß eine Ausnehmung 41 beidseits für die Verbindungslasche 39 gebildet ist. Das Beschickungsgehäuse 12 enthält einen sich in Längsrichtung erstreckenden Schlitz 42, dessen Breite etwas größer als ein Befestigungselement ist. Beidseits des Schlitzes sind in der Seitenkante 43 des Beschickungsgehäuses 12 Löcher 47 angeordnet. Eines dieser Löcher 44 dient zur Aufnahme einer Achse, um die sich das Sperrelement 17 verschwenken kann.

Fig. 5 zeigt die Aufsicht auf den Einführstutzen, wobei wieder zu sehen ist, daß der Einführstutzen an einem im Querschnitt rechtwinkligen Halsrohr befestigt wird.

Einzelheiten der Vereinzelungseinrichtung, die das Sperrelement 17 aufweist, sind aus Fig. 10 zu sehen. Das Sperrelement 17 ist um eine durch ein Loch 44 gehende Achse verschwenkbar angeordnet. Das Sperrelement weist zwei stabile Endstellungen auf, von denen Fig. 10 eine darstellt. In dieser Endstellung greift eine Nase 18 in den Schlitz 42 des Beschickungsgehäuses ein. Ein vor der Nase 18 liegendes Befestigungselement wird durch die Nase 18 daran gehindert, in den Durchgang 3 des Beschickungsgehäuses 12 zu rutschen. Wird nun das Gerät betrieben, indem eine Schraube eingeschraubt wird, so gelangt ein an einer Betätigungsplatte 45 angebrachter Zapfen 46 zur Anlage an einer Nockenfläche 47 des Sperrelements 17. Bei Anlage und Weiterschieben verschwenkt der Zapfen 46 das Sperrelement im Uhrzeigersinn um einen Winkel von etwa 45°, so daß die Nase 18 aus dem Schlitz 42 herausbewegt wird. Gleichzeitig wird aber die mit Abstand zur Nase 18 angeordnete Nase 19 in den Schlitz hineinbewegt. Wenn die Schraube eingeschraubt ist, so bewegt sich der Antrieb unter der Wirkung der Feder 22 wieder nach oben, und der Zapfen 46 gelangt nun zur Anlage an der zweiten Nockenfläche 48 des Sperrelementes 17 und verschwenkt dieses wieder in die Ausgangsstellung. Zu diesem Zeitpunkt kann das das unmittelbar vor dem Beschickungsgehäuse 12 vorhandene Befestigungselement in den Durchgang 13 gelangen und nach unten zum Haltekopf fallen. Zum Freigeben eines Befestigungselementes ist also eine hin- und hergehende Bewegung des Zapfens erforderlich. Zum Festlegen des Sperrelementes dient ein Kugeldruckstück, das in eine von zwei Vertiefungen eingreift.

Fig. 11 zeigt die Anordnung des Zapfens 46 am unteren Ende der Betätigungsplatte 45, die ihrerseits an einer Schelle 48 an der Außenhülse 7 festgelegt ist. Eine Feinabstellung kann mit Hilfe eines Längsschlitzes 49 geschehen. Die Freigabe des jeweils nächsten Befestigungselementes geschieht immer bei er Aufwärtsbewegung, da dann das Befestigungselement ausreichend Zeit hat, zum Haltekopf zu fallen.

Aus Fig. 11 ist im übrigen nochmals die Wirkung der Anschlagmutter 5 zu sehen, die das Abwärtsverschieben der Außenhülse 7 begrenzt. Die Anschlagmutter 5 kann aufgrund ihrer Gewindeverbindung mit dem Halsrohr 1 oder dem Führungsrohr 4 sehr fein verstellt werden, so daß sich ein genauer Anschlag ergibt.

An dem Haltekopf 3 kann im übrigen ein in der Figur nicht dargestellter Anschlag angebracht sein, um ggf. den Abstand zwischen der Unterseite 49 des Halsrohres 1 und der Oberfläche, auf der festgeschraubt werden soll, einzustellen.

Einzelheiten des Haltekopfs ergeben sich aus den Figuren 12 und 13. Das Halsrohr 1 weist eine Innenöffnung 50 mit kreisrundem Querschnitt auf, siehe auch Fig. 13. Der Haltekopf 3 ist an der Außenseite des Halsrohrs 1 befestigt. Er kann beispielsweise aus zwei Teilen 3a, 3b bestehen, die längs einer Mittelebene geteilt sind und die miteinander verschraubt werden können. Im unteren Bereich enthält der Haltekopf 3 eine verbreiterte Innenöffnung 51, in der zwei Haltebacken 52 schwenkbar gelagert sind. Die beiden Haltebacken 52 sind spiegelsymmetrisch zu einer Längsmittelebene ausgebildet und liegen im Bereich dieser Mittelebene in ihrer in Fig. 12 dargestellten geschlossenen Stellung mit ihren Seitenkanten 53 aneinander an. Beide Haltebacken 52 sind im Bereich ihres oberen Endes an seitlich nach außen gerichteten Zapfen 54 schwenkbar angelenkt. Sie werden in die dargestellte geschlossene Stellung mit Hilfe von Federn 55 beaufschlagt, die mit ihren Mittelteil um Zapfen 56 herumgewickelt sind und mit ihren beiden freien Enden sich abstützen, mit dem einen Ende an der Wand des Haltekopfs 3 und mit dem anderen Ende an der Außenseite des Haltebackens 52.

Damit die Haltebacken 52 in geschlossenem Zustand immer symmetrisch angeordnet sind, ist im Bereich der Seitenwände des Haltekopfs 3 je ein Zapfen 57 angeordnet, der einen Mittelanschlag für beide Haltebacken 52 bildet.

Die Innenwände 58 der Haltebacken verlaufen trichterförmig, wobei der Trichter sich nach unten verengt. Im Bereich der Unterseite lassen die Haltebacken 52 eine Öffnung 59 frei, die axial ausgerichtet ist. Eine nach unten gelangende Schraube gerät mit ihrer Spitze in diese Öffnung 59 und zentriert sich dadurch selbst.

Die Unterkante 60 des Halsrohrs 1 reicht etwas tiefer als die Oberkante der Haltebacken 52, so daß das Halsrohr und insbesondere seine Innenöffnung bis in den Bereich zwischen den beiden Backen 52 reicht.

Eine von oben durch das Halsrohr 1 nach unten fallende Schraube wird mit ihrer Spitze durch die Öffnung 59 zwischen den beiden Haltebacken 52 gehalten. Im Bereich ihres oberen Endes wird der Kopf des Befestigungselementes, beispielsweise ein Senkkopf einer Schraube, von der ihn umgebenden Wand des Halsrohrs 1 gehalten. Eine noch mögliche Abweichung der Längsachse der Schraube von der Längsachse des Geräts wird durch den Durchmesserunterschied zwischen der Innenöffnung des Halsrohrs und dem Schraubenkopf bestimmt. Um auch für kleinere Schraubenköpfe eine ausreichende Halterung zu gewährleisten, ist erfindungsgemäß vorgesehen, in das Halsrohr 1 ein weiteres Rohrelement 61 einzuschieben. Auf diese Weise lassen sich Schrauben mit kleineren Kopfdurchmesser ebenfalls haltern. Bei vollständig auseinandergeklappten Haltebacken 52 läßt sich das Rohrelement 61 nach unten aus dem Haltekopf herausnehmen. In gleicher Weise läßt es sich ebenfalls von unten her einschieben.

In dem Schnitt der Figur 13 ist die Anordnung des Rohrelementes 61 in der Innenbohrung des Halsrohrs 1 zu sehen. Angedeutet ist ein Rastelement 62, das beispielsweise unter Federspannung stehend in eine Vertiefung des Rohrelementes 61 eingreift, um dieses in der korrekten Stellung zu haltern.

Wie aus Figur 12 ebenfalls zu entnehmen ist, reicht das zusätzliche Rohrelement 61 für die schmaleren Schrauben etwas in die Haltebacken 52 hinein.

Bei dem von der Erfindung vorgeschlagenen Verschraubungsgerät ist der Haltekopf besonders einfach aufgebaut. Er läßt sich nicht nur wirtschaftlich herstellen, sondern ist aufgrund seines einfachen und robusten Aufbaus für den rauhen Montagebetrieb besonders gut geeignet.

## Patentansprüche

1. Gerät zum Einsetzen bzw. Eintreiben von Befestigungselementen, mit einem an seinem unteren Ende angeordneten Haltekopf (3) mit einer Halteeinrichtung für ein einzutreibendes Befestigungselement, einer Zuführeinrichtung zum Zuführen des Befestigungselements zu dem Haltekopf (3), sowie mit einem Antrieb zum Angreifen an dem und Eintreiben des von der Halteeinrichtung gehaltenen Befestigungselements, wobei die Halteeinrichtung derart ausgebildet ist, daß sie an dem Befestigungselement an zwei in dessen Längsrichtung voneinander beabstandeten Stellen angreift, nämlich dem Kopf und dem Spitzenbereich des Befestigungselements, und zum Angreifen an der Spitze des Befestigungselements zwei im wesentlichen radial bewegbare, insbesondere verschwenkbare Haltebacken (52) vorgesehen sind, die ggf. in geschlossenem Zustand zwischeneinander eine Öffnung (59) für die Spitze des Befestigungselements frei lassen, dadurch gekennzeichnet, daß zur Halterung des Befestigungselements im Bereich seines Kopfes ein diesen umgebendes austauschbares Rohrelement (1, 61) vorgesehen ist.

2. Gerät nach Anspruch 1, bei dem die Halteeinrichtung das vordere Ende des Befestigungselements ausrichtet.

3. Gerät nach Anspruch 1 oder 2, bei dem das Rohrelement (61) von der Unterseite des Geräts her in den Haltekopf (3) einsetzbar und aus diesem herausnehmbar ist, wobei es vorzugsweise rastend gehaltert wird.

4. Gerät nach einem der Ansprüche 1 bis 3, dadurch gekennzeichnet, daß das Rohrelement (1, 61) von oben her bis zwischen die Haltebacken (52) reicht.

5. Gerät nach einem der vorhergehenden Ansprüche, bei dem die Haltebacken (52) mindestens teilweise unabhängig voneinander bewegbar sind.

6. Gerät nach einem der vorhergehenden Ansprüche, bei dem die Haltebacken (52) federbeaufschlagt sind.

7. Gerät nach einem der vorhergehenden Ansprüche, bei dem die Zuführeinrichtung ein Magazin (14) für die Befestigungselemente aufweist, das vorzugsweise die Befestigungselemente lose aufnimmt.

8. Gerät nach Anspruch 7, bei dem das Magazin (14) derart ausgebildet ist, daß die Befestigungselemente unter dem Einfluß der Schwerkraft in die Zuführeinrichtung gelangen.

9. Gerät nach Anspruch 7 oder 8, bei dem die Zuführeinrichtung (2, 12) eine Vereinzelungseinrichtung (16) für die Befestigungselemente, die beim Eintreiben eines Befestigungselements weitergeschaltet wird, sowie vorzugsweise eine Möglichkeit zum Eingeben eines einzelnen Befestigungselements unter Umgehung des Magazins (14) aufweist.

10. Gerät nach einem der vorhergehenden Ansprüche, bei dem das Befestigungselement eine Schraube ist und der Antrieb einen Schrauberantrieb mit einer durch den beim Einschrauben der Schraube entstehenden Gegendruck einrückbaren Kupplung aufweist.

11. Gerät nach einem der vorhergehenden Ansprüche, bei dem an dem Haltekopf (3) und/oder am unteren Ende des Gerätes ein Abstandselement vorgesehen ist.

## Claims

1. Device for inserting or driving in fastening elements, with a retaining head (3), located at its lower end and having a retaining device for a fastening element to be driven in, a supply device for supplying the fastening element to the retaining head (3), as well as drive for acting on and driving in the fastening element retained by the retaining device, which is constructed in such a way that it acts on the fastening element at two spaced locations in the longitudinal direction thereof, namely the head and the tip region of the fastening element, and for acting on the tip of the fastening element there are two substantially radially movable, in particular pivotable retaining jaws (52), which optionally in the closed state leave free between them an opening (59) for the tip of the fastening element, characterized in that for retaining the fastening element in the vicinity of its head is provided a replaceable tube element (1, 61) surrounding it.

2. Device according to claim 1, wherein the retaining device aligns the front end of the fastening element.

3. Device according to claim 1 or 2, wherein the tube element (61) is insertable in and removable from the retaining head (3) from the underside of the device and is preferably retained in locking manner.

4. Device according to one of the claims 1 to 3, characterized in that the tube element (1, 61) extends from above between the retaining jaws (52).

5. Device according to one of the preceding claims, wherein the retaining jaws (52) are at least partly movable independently of one another.

6. Device according to one of the preceding claims, wherein the retaining jaws (52) are spring-loaded.

7. Device according to one of the preceding claims, wherein the supply device has a magazine (14) for the fastening elements, which preferably loosely receives said fastening elements.

8. Device according to claim 7, wherein the magazine (14) is so constructed that the fastening elements enter the supply device under the influence of gravity.

9. Device according to claim 7 or 8, wherein the supply device (2, 12) has a single feed device (16) for the fastening elements, which is indexed on driving in a fastening element, as well as preferably a possibility for introducing a single fastening element, whilst bypassing the magazine (14).

10. Device according to one of the preceding claims, wherein the fastening element is a screw and the drive a screwdriver drive, with a clutch engageable by the counterpressure arising on screwing in the screw.

11. Device according to one of the preceding claims, wherein a spacer is provided on the retaining head (3) and/or on the lower end of the device.

## Revendications

1. Appareil pour insérer respectivement pour enfoncer des éléments de fixation, comprenant une tête de support (3), disposée à l'extrémité inférieure de l'appareil et munie d'un dispositif de retenue pour un élément de fixation à enfoncer, un dispositif d'amenée pour l'amenée de l'élément de fixation à la tête de retenue (3) ainsi qu'un entraînement pour agripper et enfoncer l'élément de fixation maintenu par le dispositif de retenue, le dispositif de retenue étant conçu de manière à appréhender l'élément de fixation à deux points séparés l'un de l'autre dans le sens longitudinal de l'élément, à savoir au niveau de la tête et de la zone pointue de l'élément de fixation, et deux mâchoires de retenue (52), mobiles essentiellement de manière radiale et pivotantes en particulier, étant prévues pour appréhender la pointe de l'élément de fixation, mâchoires qui libèrent le cas échéant une ouverture (59) entre elles à l'état fermé pour la pointe de l'élément de fixation, caractérisé en ce que, dans la zone de la tête de l'élément de fixation, il est prévu un élément tubulaire (1, 61) interchangeable qui l'entoure en vue de sa fixation.

2. Appareil selon la revendication 1, selon laquelle le dispositif de retenue aligne l'extrémité avant de l'élément de fixation.

3. Appareil selon la revendication 1 ou 2, selon laquelle l'élément tubulaire (61) peut être inséré depuis la face inférieure de l'appareil dans la tête de retenue (3) et retiré de cette dernière, son maintien se faisant de préférence par encliquetage.

4. Appareil selon l'une des revendications 1 à 3, caractérisé en ce que l'élément tubulaire (1, 61) s'engage par le haut et vient se placer entre les mâchoires de retenue (52).

5. Appareil selon l'une des revendications précédentes, selon laquelle les mâchoires de retenue (52) sont mobiles au moins partiellement indépendamment les unes des autres.

6. Appareil selon l'une des revendications précédentes, selon laquelle les mâchoires de retenue (52) subissent l'impact d'un ressorts

7. Appareil selon l'une des revendications précédentes, selon laquelle le dispositif d'amenée présente, pour les éléments de fixation, un magasin (14) dans lequel viennent se loger de préférence les éléments de fixation avec du jeu.

8. Appareil selon la revendication 7, selon laquelle le magasin (14) est conçu de sorte que les éléments de fixation parviennent dans le dispositif d'amenée sous l'action de la pesanteur.

9. Appareil selon la revendication 7 ou 8, selon laquelle le dispositif d'amenée (2, 12) présente un dispositif d'individualisation (16) pour les éléments de fixation qui intervient au moment de l'enfoncement d'un élément de fixation, ainsi que de préférence la possibilité d'introduire un élément de fixation séparé en contournant le magasin (14).

10. Appareil selon l'une des revendications précédentes, selon laquelle l'élément de fixation est une vis et l'entraînement présente un entraînement de vissage comprenant un accouplement pouvant se mettre en prise sous l'action de la contre-pression générée au moment du vissage de la vis.

11. Appareil selon l'une des revendications précédentes, selon laquelle il est prévu sur la tête de retenue (3) et/ou sur l'extrémité inférieure de l'appareil, un élément d'écartement.
